# EUROPÄISCHE PATENTSCHRIFT

(11) **EP 3 710 694 B1**
(45) Veröffentlichungstag und Bekanntmachung des Hinweises auf die Patenterteilung: **18.12.2024**
(21) Anmeldenummer: 18799518.8
(22) Anmeldetag: 06.11.2018
(51) Int. Cl.: F03D 13/20, F03D 13/40

(54) **FLANSCHGESTELL UND MONTAGESET ZUR VORMONTAGE UND/ODER ZUM TRANSPORT UND/ODER ZUR MONTAGE EINES TURMSEGMENTS FÜR EINE WINDENERGIEANLAGE SOWIE VERFAHREN**
FLANGE FRAME AND ASSEMBLY SET FOR PRE-ASSEMBLING AND/OR TRANSPORTING AND/OR ASSEMBLING A TOWER SEGMENT FOR A WIND TURBINE, AND METHOD
CADRE DE BRIDE ET ENSEMBLE DE MONTAGE POUR LE PRÉ-MONTAGE ET/OU LE TRANSPORT ET/OU LE MONTAGE D'UN SEGMENT DE TOUR DESTINÉ À UNE ÉOLIENNE ET PROCEDE

(30) Priorität: 16.11.2017 DE 102017127035
(43) Veröffentlichungstag der Anmeldung: 23.09.2020
(73) Patentinhaber: Wobben Properties GmbH, 26607 Aurich (DE)
(72) Erfinder: KÜPKER, Stephan, 26817 Rhauderfehn (DE); FLESSNER, Günter, 26605 Aurich (DE); SACHS, Julia, 28213 Bremen (DE); BEECKMANN, Sascha, 26802 Veenhusen (DE); MEYER, Wolfgang, 26639 Wiesmoor (DE)
(74) Vertreter: Eisenführ Speiser
(86) Internationale Anmeldenummer: PCT/EP2018/080268
(87) Internationale Veröffentlichungsnummer: WO 2019/096624

(56) Entgegenhaltungen:
- EP-A1- 2 626 547
- DE-T5- 112010 005 504
- ES-A1- 2 609 308
- US-A1- 2013 104 376
- US-A1- 2015 308 134

## Beschreibung

Die Erfindung betrifft ein Flanschgestell zur Vormontage und/oder zum Transport und/oder zur Montage eines Turmsegments für eine Windenergieanlage und/oder eines Turmabschnitts einer Windenergieanlage und/oder eines Turms einer Windenergieanlage. Die Erfindung betrifft ferner ein Montageset zur Vormontage und/oder zum Transport und/oder zur Montage eines Turmsegments für eine Windenergieanlage und/oder eines Turmabschnitts einer Windenergieanlage. Die Erfindung betrifft auch ein Verfahren zur Vormontage und/oder zum Transport und/oder zur Montage eines Turmsegments für eine Windenergieanlage und/oder eines Turmabschnitts einer Windenergieanlage und/oder eines Turms einer Windenergieanlage sowie ein Verfahren zum Transport eines Turmsegments für eine Windenergieanlage und/oder eines Turmabschnitts einer Windenergieanlage und/oder eines Turms einer Windenergieanlage und ein Verfahren zur Vormontage und/oder zur Montage eines Turmsegments für eine Windenergieanlage und/oder eines Turmabschnitts einer Windenergieanlage und/oder eines Turms einer Windenergieanlage.

Turmbauwerke, insbesondere für Windenergieanlage, umfassen oft eine Vielzahl von Turmsegmenten. Beispielsweise können mehrere Turmsegmente über im Einbauzustand im Wesentlichen vertikale Verbindungen miteinander zu einem - meist ringförmigen - Turmabschnitt verbunden sein. Mehrere Turmabschnitte werden übereinander angeordnet und bilden den Turm.

Türme für Windenergieanlagen und Turmsegmente sowie Herstellungs- und Montageverfahren sind bekannt beispielsweise aus DE 10 2011 077 428, DE 10 2011 078 016, WO 2015/148350, DE 10 2011 080 497, DE 10 2013 226 536, DE 10 2015 209 686, DE 10 2015 211 269, DE 10 2016 106 525, DE 10 2016 106 526, DE 10 2016 114 114, DE 10 2016 114 661. Weitere Verbesserungen sind wünschenswert.

Das Deutsche Patent- und Markenamt hat in der Prioritätsanmeldung zur vorliegenden Anmeldung folgenden Stand der Technik recherchiert: US 9 260 875 B2, WO 2013/ 117 182 A1. Weitere Informationen zum Stand der Technik sind aus DE112010005504T bekannt.

Es ist daher eine Aufgabe der vorliegenden Erfindung, ein Flanschgestell und ein Montageset zur Vormontage und/oder zum Transport und/oder zur Montage eines Turmsegments für eine Windenergieanlage sowie entsprechende Verfahren bereitzustellen, welche gegenüber existierenden Lösungen verbessert sind. Insbesondere ist es eine Aufgabe der vorliegenden Erfindung, ein Flanschgestell und ein Montageset zur Vormontage und/oder zum Transport und/oder zur Montage eines Turmsegments für eine Windenergieanlage sowie entsprechende Verfahren bereitzustellen, welche die Vormontage und/oder den Transport und/oder die Montage von Turmsegmenten vereinfachen und/oder verbessern.

Diese Aufgabe wird gelöst durch ein Flanschgestell zur Vormontage und/oder zum Transport und/oder zur Montage eines Turmsegments für eine Windenergieanlage und/oder eines Turmabschnitts einer Windenergieanlage und/oder eines Turms einer Windenergieanlage, gemäß Anspruch 1.

Das hier beschriebene Flanschgestell kann mit seinen beiden Flanschabschnitten an einem Horizontalflansch eines Turmsegments lösbar angeordnet werden. Das Stützelement des Flanschgestell dient dazu, dass Flanschgestell auf einer Aufstandsfläche abstützen zu können, beispielsweise auf einem Boden, auf einer Transportfläche eines Transportfahrzeugs oder auf einem anderen Flanschgestell. Dadurch kann auch ein am Flanschgestell befestigtes Turmsegment auf der Aufstandsfläche abgestützt werden. Dies ist insbesondere bevorzugt bei der Vormontage, wo beispielsweise weitere Elemente an einem Turmsegment angebracht werden können, wie etwa Turmeinbauten in Form von Leitern, Kabelsträngen und Halterungen dafür oder anderen Versorgungseinrichtungen für einen Turm. Ebenso ist eine Abstützung bevorzugt für den Transport von Turmsegmenten.

Das hier beschriebene Flanschgestell kann vorzugsweise auch für andere Elemente und/oder Bauteile eingesetzt werden,

Das Flanschgestell weist ferner einen Hebebolzen auf, an dem ein schlingenförmiges Hebezeug angreifen kann. Ein schlingenförmiges Hebezeug wird hierin insbesondere verstanden als ein Hebezeug, welches für den Angriff an einem zu hebenden Element keinen Haken aufweist, sondern eine Schlinge oder Schlaufe, die beispielsweise von einer Kette und/oder einem Seil und/oder einem Band gebildet sein kann. Der Hebebolzen ist ein von einer Fläche vorstehender Vorsprung , der beispielsweise im wesentlichen zylindrisch sein kann. Der Hebebolzen dient zum Angriff eines schlingenförmigen Hebezeug, indem das schlingenförmige Hebezeug, insbesondere eine Schlinge oder Schlaufe des schlingenförmigen Hebezeugs, über ein Ende des Hebebolzen geführt wird und an einem Abschnitt einer Außenumfangsfläche des Hebebolzen anliegt. Dies ist insbesondere bevorzugt zum Anheben und/oder Absenken eines Turmsegments und/oder für verschiedene Bewegungen des Turmsegments. Insbesondere bei der Montage, aber auch beim Transport und/oder der Vormontage müssen die Turmsegmente von einer Position in eine andere gebracht werden, wofür der Hebebolzen besonders geeignet ist.

Das Flanschgestell ist vorzugweise derart ausgebildet, dass der Hebebolzen in einem Schwerpunkt und/oder Drehpunkt und/oder einer Schwerelinie und/oder einer Drehlinie des Turmsegments liegt.

Das Flanschgestell eignet sich somit sowohl für die Vormontage als auch für den Transport und die (End-)Montage eines Turmsegments. Ein Vorteil ist, dass keine weiteren Elemente oder Vorrichtungen benötigt werden zum Abstützen oder für den Angriff eines schlingenförmigen Hebezeugs, da sowohl der Hebebolzen als auch das Stützelement am Flanschgestell angeordnet sind.

Turmsegmente und/oder Turmabschnitte können aus Stahl ausgebildet sein oder Stahl umfassen oder aus Beton, insbesondere Stahlbeton und/oder Spannbeton, ausgebildet sein oder diesen umfassen. Türme, die sowohl Stahlsegmente und/oder Stahlabschnitte als auch Betonsegmente und/oder Betonabschnitte enthalten, werden auch als Hybridtürme bezeichnet.

Vorzugsweise weist ein Turmsegmente einen im Einbauzustand unteren Horizontalflansch und einen im Einbauzustand oberen Horizontalflansch auf, die insbesondere dazu dienen, das Turmsegment mit im Einbauzustand in im Wesentlichen vertikaler Richtung benachbarten Elementen des Turms zu verbinden. Ferner vorzugsweise weist ein Turmsegment zwei oder mehr Vertikalflansche auf, die insbesondere dazu dienen, das Turmsegment mit im Einbauzustand in im Wesentlichen horizontaler Richtung benachbarten Elementen des Turms zu verbinden.

Das Flanschgestell umfasst ein Transportmodul und ein Hebemodul, wobei das Transportmodul und das Hebemodul lösbar miteinander verbunden sind. Das Transportmodul dient vorzugsweise für den Transport und/oder die Lagerung von Turmsegmenten. Das Hebemodul dient vorzugsweise dazu, ein Turmsegment zu bewegen.

Das Flanschgestell und/oder das Transportmodul und/oder das Hebemodul besteht vorzugsweise ganz oder teilweise aus Stahl oder weist Stahl auf.

Es ist ferner bevorzugt, dass das Transportmodul die zwei Flanschabschnitte und das Stützelement umfasst. Das Hebemodul umfasst den Hebebolzen. Diese Ausgestaltungen sind besonders bevorzugt, um mit dem Transportmodul die Abstützung des Turmsegments über das Flanschgestell zu ermöglichen und mit dem Hebemodul eine Bewegung und/oder Position Veränderung des Turmsegments zu ermöglichen.

Es ist ferner bevorzugt, dass die zwei Flanschabschnitte in Umfangsrichtung des Horizontalflansches voneinander beabstandet sind.

In einer bevorzugten Ausführungsform ist vorgesehen, dass das Flanschgestell drei Flanschabschnitte umfasst, wobei die drei Flanschabschnitte vorzugsweise in Umfangsrichtung des Horizontalflansches voneinander beabstandet sind.

Ein Stützelement kann vorzugsweise ein Verbindungselement aufweisen, insbesondere an einem oder beiden Enden des Stützelements. Das Verbindungselement kann vorzugsweise ein genormtes Verbindungselement sein und/oder für eine Standardverbindung geeignet sein. Insbesondere ist es bevorzugt, dass das Verbindungselement für Verbindungen mit ISO-Containern geeignet ist und/oder Eigenschaften aufweist, die den Verbindungselementen von ISO- Containern, insbesondere sogenannten Quick-lock- Verbindungselementen, entsprechen.

In einer weiteren bevorzugten Ausführungsform ist vorgesehen, dass das Flanschgestell zwei, drei oder mehrere Stützelemente umfasst. Vorzugsweise sind die zwei, drei oder mehreren Stützelemente voneinander beabstandet.

Es ist ferner bevorzugt, dass das Flanschgestell ein Angriffselement zum Angriff eines Hebezeugs umfasst. Ein Angriffselement zum Angriff eines Hebezeugs kann beispielsweise ausgebildet sein als Durchgangsloch, Öse, Schäkel, o.ä. Das Angriffselement ist vorzugsweise zum Angriff eines hakenförmigen Hebezeugs geeignet, wobei vorzugsweise der Haken des hakenförmigen Hebezeugs mit einer Hakenspitze durch eine Öffnung des Angriffselements durchgreifen kann. Das Angriffselement ist vorzugsweise am Hebemodul und/oder am Transportmodul angeordnet.

Es ist ferner bevorzugt, dass das Flanschgestell zwei, drei oder mehrere Angriffselemente umfasst.

In einer bevorzugten Ausführungsform ist vorgesehen, dass das Stützelement derart ausgebildet ist, dass es sich nicht über eine Außenfläche der Turmsegmentwandung hinaus erstreckt, wenn das Flanschgestell an dem Horizontalflansch des Turmsegments angebracht ist. Das Stützelement ist vorzugsweise derart ausgebildet ist, dass das Stützelement außerhalb einer Flanschebene angeordnet ist, wenn das Flanschgestell an dem Horizontalflansch des Turmsegments angebracht ist

Es ist ferner bevorzugt, dass das Stützelement derart ausgebildet ist, dass es sich über eine Ebene, welche zwei Vertikalflansche des Turmsegments verbindet, hinaus erstreckt, wenn das Flanschgestell an dem Horizontalflansch des Turmsegments angebracht ist.

Die Ebene, welche zwei Vertikalflansche des Turmsegments verbindet, ist vorzugsweise eine gedachte Ebene, und verläuft vorzugsweise parallel zu einer Längsachse des Turmsegments oder eines das Turmsegment aufweisenden Turms. Das Stützelement erstreckt sich vorzugsweise in einer Ebene, welche orthogonal ist zu einer Längsachse des Turmsegments oder eines das Turmsegment aufweisenden Turms.

Diese Ausgestaltungen sind insbesondere bevorzugt, um ein Turmsegment beispielsweise auf einem Boden oder einer Transportfläche abstützen zu können. Vorzugsweise entsteht so ein Abstand zwischen der Aufstandsfläche und dem Turmsegment, wodurch Beschädigungen am Turmsegment verhindert oder verringert werden können.

Insbesondere ist bevorzugt, dass das Stützelement derart ausgebildet ist, dass sich ein im Transportzustand unteres Ende des Stützelements auf einem oberen Ende eines weiteren Stützelements, das an einem Horizontalflansch eines weiteren Turmsegments angeordnet ist, abstützt. Auf diese Weise können Turmsegmente mittels der Flanschgestelle aufeinander gestapelt werden, was insbesondere beim Transport bevorzugt ist.

Eine bevorzugte Weiterbildung zeichnet sich dadurch aus, dass das Stützelement derart ausgebildet ist, dass sich ein im Transportzustand unteres Ende des Stützelements auf einem oberen Ende eines weiteren Stützelements, das an einem Horizontalflansch eines weiteren Turmsegments angeordnet ist, derart abstützt, dass die Turmsegmente voneinander beabstandet sind.

Dies ist insbesondere bevorzugt, um mehrere Turmsegmente übereinander stapeln zu können. Vorzugsweise ist das Stützelement derart ausgebildet, dass sich ein im Transportzustand unteres Ende des Stützelements auf einem oberen Ende eines weiteren Stützelements, das an einem Horizontalflansch eines weiteren Turmsegments angeordnet ist, derart abstützt, dass die Turmsegmente vollständig voneinander beabstandet sind. Unter einer vollständigen Beabstandung bitte insbesondere verstanden, dass sich die Turmsegmente nicht berühren, sondern lediglich die an den Horizontalflanschen angeordneten Flanschgestelle.

Auf diese Weise können Beschädigungen an den Turmsegmenten während des Transports und/oder der Lagerung verringert oder verhindert werden.

In einer weiteren bevorzugten Ausführungsform weist das Flanschgestell einen, zwei oder mehrere Strebenangriffspunkte auf. Ein Strebenangriffspunkt dient vorzugsweise dazu, eine oder mehrere Streben lösbar daran zu befestigen. Die Streben können insbesondere dazu dienen, zwei Flanschgestelle, die jeweils an einem Horizontalflansch von unterschiedlichen Turmsegmenten angeordnet sind, miteinander zu verbinden. Hierzu können die Streben vorzugsweise längenveränderlich ausgebildet sein, beispielsweise als Hydraulikstempel.

Gemäß einem weiteren Aspekt der Erfindung wird die eingangs genannte Aufgabe gelöst durch ein Montageset nach Anspruch 4 zur Vormontage und/oder zum Transport und/oder zur Montage eines Turmsegments für eine Windenergieanlage und/oder eines Turmabschnitts einer Windenergieanlage, umfassend ein zuvor beschriebenes Flanschgestell.

Vorzugsweise umfasst das Montageset zwei, drei oder mehrere zuvor beschriebene Flanschgestelle. Insbesondere ist es bevorzugt, dass an einem Turmsegment sowohl an einem im Einbauzustand oberen Horizontalflansch als auch an einem im Einbauzustand unteren Horizontalflansch jeweils ein Flanschgestell angeordnet wird.

Das Montageset umfasst ein Hebemodul und ein erstes Transportmodul und ein zweites Transportmodul, wobei das erste und zweite Transportmodul unterschiedlich ausgebildet sind bzw. sein können.

Es ist ferner bevorzugt, dass das Montageset mehrere gleich ausgebildete Hebemodule umfasst. Das erste und das zweite Transportmodul weisen unterschiedliche Abmessungen auf.

In einer bevorzugten Ausführungsform des Montagesets ist vorgesehen, dass die Flanschabschnitte des ersten Transportmoduls zur Befestigung an einem oberen Horizontalflansch eines ersten Turmsegments mit einem ersten Radius und die Flanschabschnitte des zweiten Transportmoduls zur Befestigung an einem unteren Horizontalflansch des ersten Turmsegments mit einem zweiten Radius ausgebildet sind, wobei der erste Radius von dem zweiten Radius verschieden ist. Dies ist insbesondere bei Turmsegmenten bevorzugt, die für einen Turmabschnitt dienen, der sich verjüngt und/oder kegelstumpfförmig ausgebildet ist. Bei Turmsegmenten, deren oberer und unterer Horizontalflansch den gleichen Radius aufweisen, beispielsweise in zylinderförmigen Turmabschnitten, können vorzugsweise auch gleich ausgebildete Transportmodule zum Einsatz kommen.

Ferner ist in einer bevorzugten Ausführungsform des Montagesets vorgesehen, dass die Flanschabschnitte des ersten Transportmoduls zur Befestigung an einem Horizontalflansch eines ersten Turmsegments mit einem ersten Radius und die Flanschabschnitte des zweiten Transportmoduls zur Befestigung an einem Horizontalflansch eines zweiten Turmsegments mit einem zweiten Radius ausgebildet sind, wobei der erste Radius von dem zweiten Radius verschieden ist. Eine bevorzugte Weiterbildung des Montagesets zeichnet sich dadurch aus, dass das erste Transportmodul erste Verbindungselemente zur lösbaren Verbindung mit dem Hebemodul aufweist und das zweite Transportmodul zweite Verbindungselemente zur lösbaren Verbindung mit dem Hebemodul aufweist. In einer weiteren bevorzugten Ausführungsform des Montagesets ist vorgesehen, dass sich die Position der ersten und zweiten Verbindungselemente unterscheidet.

Das Montageset und seine bevorzugten Ausgestaltungen haben den Vorteil, dass für Turmsegmente mit unterschiedlichen Abmessungen lediglich entsprechend abgestimmte Transportmodule bereitgehalten werden müssen, diese jedoch mit Hebemodulen kombiniert werden können, die gleichartig ausgebildet sind. Auf diese Weise kann ein Hebemodul mit einer Vielzahl von verschieden ausgebildeten Transportmodulen eingesetzt werden. Die Verbindungselemente der unterschiedlichen Transportmodule sind vorzugsweise jeweils so positioniert, dass der Hebebolzen eines damit verbundenen Hebemoduls in einem Schwerpunkt und/oder Drehpunkt und/oder einer Schwerelinie und/oder einer Drehlinie des jeweiligen Turmsegments liegt.

Vorzugsweise weist das Montageset ferner mindestens eine Strebe und/oder mindestens Verbindungsflanschstück auf.

In einer bevorzugten Ausgestaltung weist das Montageset ferner zwei oder mehrere Verbindungsflanschstücke und/oder zwei oder mehrere Streben und/oder mindestens zwei unterschiedliche Streben und/oder mindestens zwei unterschiedliche Verbindungsflanschstücke auf.

Gemäß einem weiteren Aspekt der Erfindung wird die eingangs genannte Aufgabe gelöst durch ein Verfahren nach Anspruch 9 zur Vormontage und/oder zum Transport und/oder zur Montage eines Turmsegments für eine Windenergieanlage und/oder eines Turmabschnitts einer Windenergieanlage und/oder eines Turms einer Windenergieanlage, umfassend
- Befestigen der Flanschabschnitte eines zuvor beschriebenen Flanschgestells an einem Horizontalflansch eines Turmsegments,
- Anbringen eines schlingenförmigen Hebezeugs an dem Hebebolzen, indem das schlingenförmige Hebezeug über ein Ende des Hebebolzens geführt wird und an einem Abschnitt einer Außenumfangsfläche des Hebebolzens anliegt,
- Anheben des Flanschgestells mittels des schlingenförmigen Hebezeugs.

Vorzugsweise umfasst das Befestigen der Flanschabschnitte eines zuvor beschriebenen Flanschgestells an einem Horizontalflansch eines Turmsegments das Befestigen des Transportmoduls am Horizontalflansch des Turmsegments und das Befestigen des Hebemoduls am Transportmodul.

Gemäß einem weiteren Aspekt der Erfindung wird die eingangs genannte Aufgabe gelöst durch ein Verfahren nach Anspruch 10 zum Transport eines Turmsegments für eine Windenergieanlage und/oder eines Turmabschnitts einer Windenergieanlage und/oder eines Turms einer Windenergieanlage, umfassend
- Befestigen der Flanschabschnitte eines ersten zuvor beschriebenen Flanschgestells an einem Horizontalflansch eines ersten Turmsegments,
- Befestigen der Flanschabschnitte eines zweiten zuvor beschriebenen Flanschgestells an einem Horizontalflansch eines zweiten Turmsegments,
- Anbringen eines schlingenförmigen Hebezeugs an dem Hebebolzen des ersten Flanschgestells, indem das schlingenförmige Hebezeug über ein Ende des Hebebolzens geführt wird und an einem Abschnitt einer Außenumfangsfläche des Hebebolzens anliegt,
- Anordnen der beiden Turmsegmente übereinander durch Absenken des ersten Turmsegments derart, dass sich ein unteres Ende des Stützelements des ersten Flanschgestells an einem oberen Ende des Stützelements des zweiten Flanschgestells abstützt.

Gemäß einem weiteren Aspekt der Erfindung wird die eingangs genannte Aufgabe gelöst durch ein Verfahren nach Anspruch 11 zur Vormontage und/oder zur Montage eines Turmsegments für eine Windenergieanlage und/oder eines Turmabschnitts einer Windenergieanlage und/oder eines Turms einer Windenergieanlage, umfassend
- Befestigen der Flanschabschnitte eines ersten zuvor beschriebenen Flanschgestells an einem Horizontalflansch eines ersten Turmsegments,
- Befestigen der Flanschabschnitte eines zweiten zuvor beschriebenen Flanschgestells an einem Horizontalflansch eines zweiten Turmsegments,
- Anordnen der beiden Turmsegmente nebeneinander derart, dass sich ein erster Vertikalflansch des ersten Turmsegments und ein erster Vertikalflansch des zweiten Turmsegments gegenüberliegen,
- Verbinden der Horizontalflansche der beiden Turmsegmente mit einem Verbindungsflanschstück,
- Verbinden der beiden Flanschgestelle mit einer Strebe.

Das Verfahren zur Vormontage und/oder zur Montage eines Turmsegments für eine Windenergieanlage und/oder eines Turmabschnitts einer Windenergieanlage und/oder eines Turms einer Windenergieanlage umfasst ferner vorzugsweise die Veränderung des Abstands eines zweiten Vertikalflansches des ersten Turmsegments und eines zweiten Vertikalflansches des zweiten Turmsegments zueinander mittels der Strebe.

Vorzugsweise werden die beiden Flanschgestelle mit zwei unterschiedlichen Streben, insbesondere zwei unterschiedlich langen Streben, miteinander verbunden.

Das Verfahren zur Vormontage und/oder zur Montage eines Turmsegments für eine Windenergieanlage und/oder eines Turmabschnitts einer Windenergieanlage und/oder eines Turms einer Windenergieanlage umfasst ferner vorzugsweise die Verbindung des ersten Vertikalflanschs des ersten Turmsegments mit dem ersten Vertikalflansch des zweiten Turmsegments.

Das Verfahren zur Vormontage und/oder zur Montage eines Turmsegments für eine Windenergieanlage und/oder eines Turmabschnitts einer Windenergieanlage und/oder eines Turms einer Windenergieanlage umfasst ferner vorzugsweise
- Befestigen der Flanschabschnitte eines dritten zuvor beschriebenen Flanschgestells an einem Horizontalflansch eines dritten Turmsegments,
- Anordnen der drei Turmsegmente nebeneinander derart, dass sich ein zweiter Vertikalflansch des ersten Turmsegments und ein erster Vertikalflansch des dritten Turmsegments gegenüberliegen und ein erster Vertikalflansch des zweiten Turmsegments und ein zweiter Vertikalflansch des dritten Turmsegments gegenüberliegen,
- Verbinden des Horizontalflanschs des dritten Turmsegments mit den beiden Horizontalflanschen des ersten und zweiten Turmsegments mit zwei Verbindungsflanschstücken,
- Verbinden des Flanschgestells des dritten Turmsegments mit den beiden Flanschgestellen des ersten und zweiten Turmsegments mit zwei Streben.

Das Verfahren zur Vormontage und/oder zur Montage eines Turmsegments für eine Windenergieanlage und/oder eines Turmabschnitts einer Windenergieanlage und/oder eines Turms einer Windenergieanlage umfasst ferner vorzugsweise Verbinden des zweiten Vertikalflanschs des ersten Turmsegments mit dem ersten Vertikalflansch des dritten Turmsegments und Verbinden des ersten Vertikalflanschs des zweiten Turmsegments mit dem zweiten Vertikalflansch des dritten Turmsegments.

Vorzugsweise gelten die hier beschriebenen Schritte gleichermaßen für gegenüberliegende Horizontalflansche, insbesondere einen im Einbauzustand unteren Horizontalflansch und einen im Einbauzustand oberen Horizontalflansch, eines Turmsegments.

Vorzugsweise gelten die hier beschriebenen Schritte gleichermaßen für Turmabschnitte, die mehr oder weniger als drei Turmsegmente, beispielsweise ein, zwei, vier, fünf, oder weitere Turmsegmente, umfassen.

Beschrieben wird ferner die Verwendung eines zuvor beschriebenen Flanschgestells in einem zur vorgeschriebenen Verfahren.

Beschrieben wird ferner eine Windenergieanlage, umfassend ein Turmsegment und/oder einen Turmabschnitt, der gemäß dem zuvor beschriebenen Verfahren vormontiert und/oder transportiert und/oder montiert wurde.

Beschrieben wird ferner ein Turmsegment für einen Turm einer Windenergieanlage, umfassend ein zuvor beschriebenes Flanschgestell und/oder ein Turmabschnitt einer Windenergieanlage, umfassend ein zuvor beschriebenes Flanschgestell und/oder ein Turm einer Windenergieanlage, umfassend ein zuvor beschriebenes Flanschgestell und/oder eine Windenergieanlage, umfassend ein zuvor beschriebenes Flanschgestell.

Die verschiedenen weiteren Aspekte der Erfindung weisen Merkmale bzw. Verfahrensschritte auf, die sie insbesondere dafür geeignet machen, mit einem erfindungsgemäßen Flanschgestell und seinen Fortbildungen verwendet zu werden.

Zu den Vorteilen, Ausführungsvarianten und Ausführungsdetails dieser weiteren Aspekte der Erfindung und ihrer Fortbildungen wird auf die vorangegangene Beschreibung zu den entsprechenden Vorrichtungsmerkmalen verwiesen.

Bevorzugte Ausgestaltungen, die sich auf ein Element im Singular beziehen, beispielsweise ein Flanschgestell, ein Flanschabschnitt, ein Stützelement, ein Angriffselement, eine Strebe, ein Turmsegment, ein Horizontalflansch, ein Vertikalflansch, etc. können vorzugsweise ebenso für zwei, drei oder mehrere dieser Elemente gelten.

Bevorzugte Ausführungsformen der Erfindung werden beispielhaft anhand der beiliegenden Figuren beschrieben. Es zeigen:
- Figur 1:: eine schematische Darstellung einer Windenergieanlage;
- Figur 2:: eine dreidimensionale Darstellung eines Turmabschnitts mit drei Turmsegmenten und an deren Horizontalflanschen angeordneten Flanschgestellen und weiteren Teilen eines Montagesets;
- Figur 3a:: einen Ausschnitt eines Turmsegments mit daran angeordneten Flanschgestell und einem Hebezeug in einer ersten Position;
- Figur 3b:: einen Ausschnitt eines Turmsegments mit daran angeordneten Flanschgestell und einem Hebezeug in einer zweiten Position;
- Figur 4a:: eine Seitenansicht von drei mittels Flanschgestellen gestapelte Turmsegmenten;
- Figur 4b:: ein Ausschnitt einer dreidimensionalen Darstellung von drei mittels Flanschgestellen gestapelte Turmsegmenten;
- Figur 5:: eine dreidimensionale Darstellung eines Turmabschnitts mit daran angeordnetem Flanschgestell und weiteren Teilen eines Montagesets;
- Figur 6:: eine dreidimensionale Darstellung von zwei Turmabschnitten mit daran angeordneten Flanschgestellen und weiteren Teilen eines Montagesets;
- Figur 7a:: eine dreidimensionale Darstellung von drei Turmabschnitten mit an den oberen Horizontalflanschen angeordneten Flanschgestellen und weiteren Teilen eines Montagesets;
- Figur 7b:: eine dreidimensionale Darstellung von drei Turmabschnitten mit an den unteren Horizontalflanschen angeordneten Flanschgestellen und weiteren Teilen eines Montagesets;
- Figur 8:: eine dreidimensionale Darstellung einer ersten Strebe;
- Figur 9:: eine dreidimensionale Darstellung einer zweiten Strebe;
- Figur 10:: eine dreidimensionale Darstellung eines ersten Verbindungflanschstücks;
- Figur 11:: eine dreidimensionale Darstellung eines zweiten Verbindungflanschstücks;
- Figur 12:: eine dreidimensionale Darstellung einer Ausführungsform eines Flanschgestells und weiteren Teilen eines Montagesets;
- Figur 13a:: eine dreidimensionale Darstellung einer Ausführungsform eines Flanschgestells mit einem Transportmodul und einem Hebemodul;
- Figur 13b:: das Transportmodul gemäß Figur 13a;
- Figur 13c:: das Hebemodul gemäß Figur 13a;
- Figur 14a:: eine dreidimensionale Darstellung einer Ausführungsvariante eines Transportmoduls;
- Figur 14b:: eine dreidimensionale Darstellung einer weiteren Ausführungsvariante eines Transportmoduls;
- Figur 14c:: eine dreidimensionale Darstellung einer weiteren Ausführungsvariante eines Transportmoduls;
- Figur 15a:: eine dreidimensionale Darstellung einer weiteren Ausführungsvariante eines Transportmoduls;
- Figur 15b:: eine dreidimensionale Darstellung einer weiteren Ausführungsvariante eines Transportmoduls;
- Figur 15c:: eine dreidimensionale Darstellung einer weiteren Ausführungsvariante eines Flanschgestells;
- Figur 16a:: eine dreidimensionale Darstellung einer Ausführungsvariante eines Flanschgestells mit Leitern; und
- Figur 16b:: eine weitere dreidimensionale Darstellung einer Ausführungsvariante eines Flanschgestells mit Leitern.

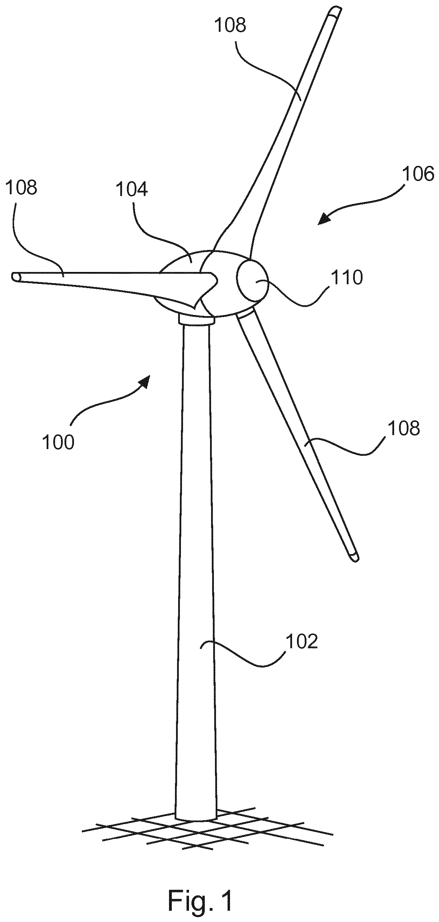

Fig. 1 zeigt eine schematische Darstellung einer Windenergieanlage. Die Windenergieanlage 100 weist einen Turm 102 und eine Gondel 104 auf dem Turm 102 auf. An der Gondel 104 ist ein aerodynamischer Rotor 106 mit drei Rotorblättern 108 und einem Spinner 110 vorgesehen. Der aerodynamische Rotor 106 wird im Betrieb der Windenergieanlage durch den Wind in eine Drehbewegung versetzt und dreht somit auch einen elektrodynamischen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 108 können durch Pitchmotoren an den Rotorblattwurzeln der jeweiligen Rotorblätter 108 verändert werden.

Gleiche, ähnliche oder im wesentlichen funktionsgleiche Elemente werden mit den gleichen Bezugszeichen versehen.

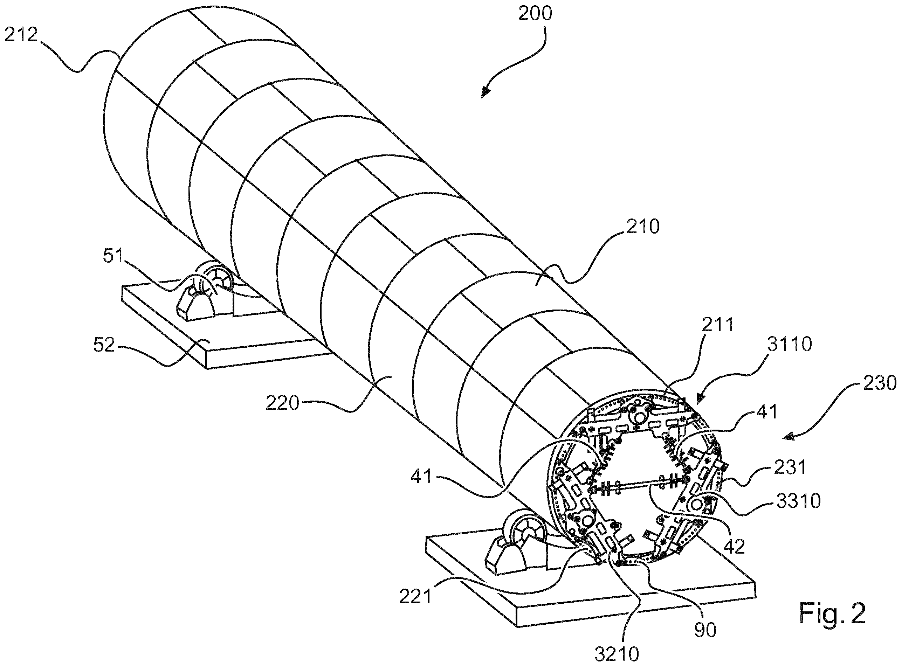

Figur 2 zeigt eine dreidimensionale Darstellung eines Turmabschnitts 200 mit drei Turmsegmenten 210, 220, 230 und an deren Horizontalflanschen 211, 221, 231 angeordneten Flanschgestellen auf einem Rollenlager 51 auf einer Basis 52.

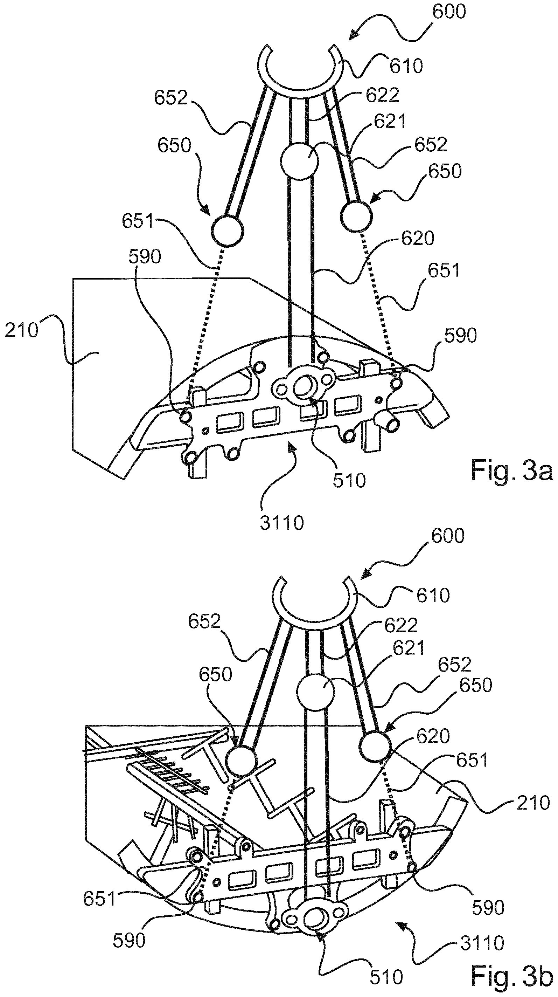

In den Figuren 3a, b ist ein Ausschnitt eines Turmsegments 210 mit daran angeordneten Flanschgestell 3110 und einem Hebezeug 600 dargestellt, und zwar in Figur 3a in einer ersten Position und in Figur 3b in einer zweiten Position, in der das Turmsegment 210 gegenüber der in Figur 3a dargestellten ersten Position gedreht ist. Ferner ist schematisch ein schlingenförmiges Hebezeug dargestellt, welches mit einer Rundschlinge 620 am Hebebolzen 510 angreift. Die Rundschlinge 620 ist ggf. über einen Schäkel 621 und eine weitere Rundschlinge 622 an einem Kranhaken 610 befestigt. In den beiden Positionen sind zudem an jeweils zwei unterschiedlichen Angriffselementen 590 jeweils ein Flaschenzug 650 mit einer Kette 651 des Flaschenzugs und einer Rundschlinge 652, welche ebenfalls am Kranhaken 610 befestigt sind, angeschlagen.

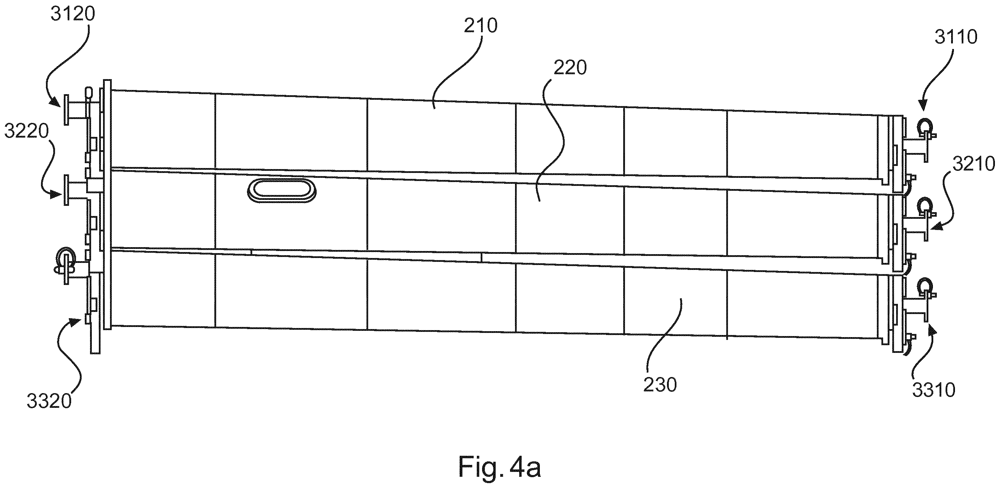

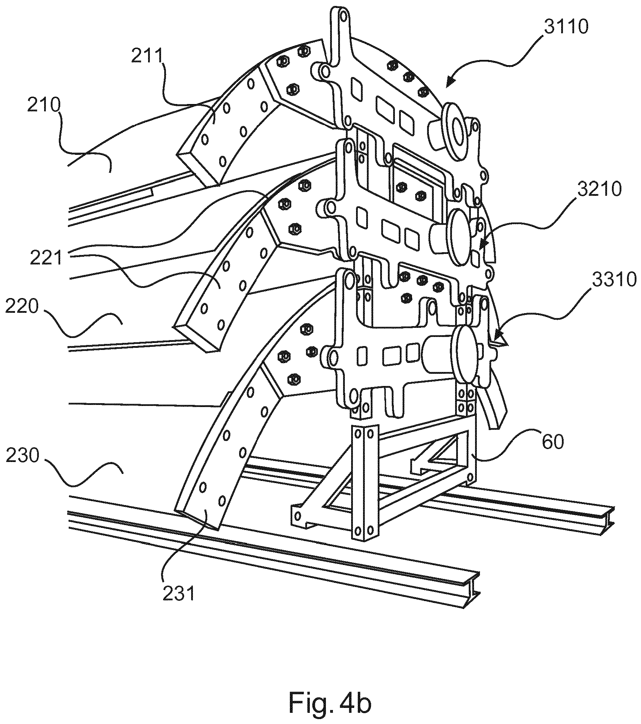

In den Figuren 4a,b sind drei Turmsegmente 210, 220, 230 gezeigt, die über an deren oberen und unteren Horizontalflanschen angeordnete Flanschgestelle 3110, 3210, 3310, 3120, 3220, 3320 übereinander gestapelt sind. Die Turmsegmente 210, 220, 230 sind hierdurch voneinander beabstandet, Vorzugsweise vollständig, sodass Beschädigungen der Turmsegmente bei der Lagerung und/oder beim Transport verringert oder vermieden werden können. Die Stützelemente sind derart ausgebildet, dass sich ein im Transportzustand unteres Ende des Stützelements auf einem oberen Ende eines weiteren Stützelements, das an einem Horizontalflansch eines weiteren Turmsegments angeordnet ist, abstützt. Die Stützelemente sind ferner derart ausgebildet, dass sie sich im an den Horizontalflansch des Turmsegments angebrachten Zustand nicht über eine Außenfläche der Turmsegmentwandung hinaus erstrecken.

In der Ausgestaltung nach Figur 4a sind die Stützelemente ferner derart ausgebildet, dass sie sich im an den Horizontalflansch des Turmsegments angebrachten Zustand über eine Ebene, welche zwei Vertikalflansche des Turmsegments verbindet, hinaus erstrecken. Dies hat den Vorteil einer guten Beabstandung der Turmsegmente nach unten.

In der Ausgestaltung nach Figur 4b erstrecken sich die Stützelemente im an den Horizontalflansch des Turmsegments angebrachten Zustand über eine Ebene, welche zwei Vertikalflansche des Turmsegments verbindet, nicht hinaus. Trotzdem wird, wie in Figur 4b zu erkennen ist, eine Beabstandung der Turmsegmente voneinander erreicht. Unterhalb des untersten Flanschgestells ist jedoch ein Stützgestell 60 angeordnet, welches den erforderlichen Abstand zum Boden herstellt,

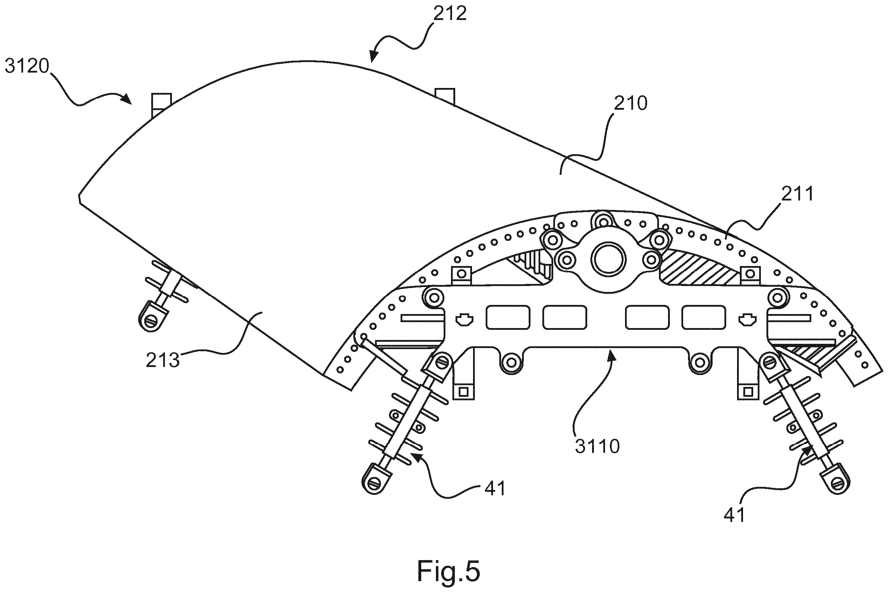

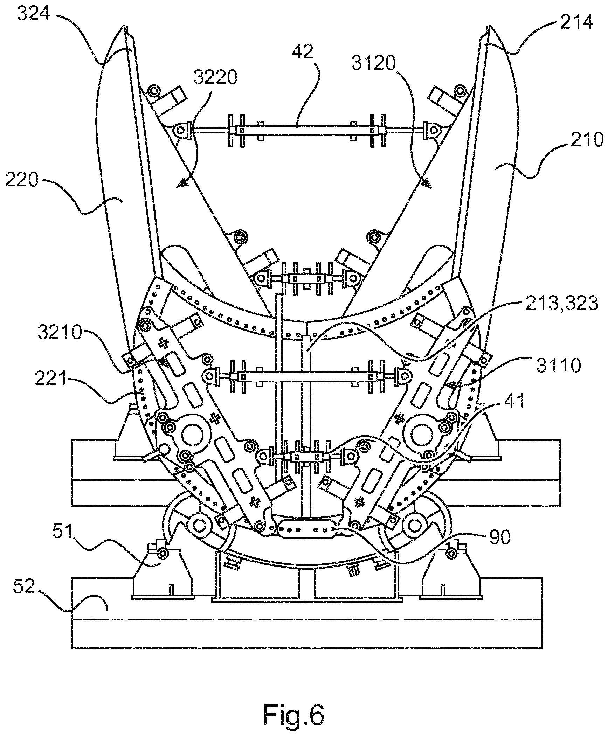

Die Figuren 5, 6, 7a,b zeigen die Montage eines Turmabschnitts 200 aus drei Turmsegmenten 210, 220, 230 in unterschiedlichen Stadien. In Figur 5 ist zunächst ein Turmsegment 210 dargestellt, an dessen oberen und unteren Horizontalflansch 211, 212 jeweils ein Flanschsegment 3110, 3120 mit zwei kurzen Streben 41 angeordnet ist. in Figur 6 ist ein zweites Turmsegment 220 dargestellt, an dessen oberen und unteren Horizontalflansch ebenfalls jeweils ein Flanschgestell 3210, 3220 angeordnet ist. Die beiden Turmsegmente 210, 220 sind über Verbindungsflanschstücke 90 miteinander verbunden. Die beiden an den oberen Horizontalflanschen angeordneten Flanschgestelle 3110, 3210 sind über eine kurze und eine lange Strebe 41, 42 miteinander verbunden, ebenso wie die beiden an den unteren beiden Horizontalflanschen angeordneten Flanschgestelle 3120, 3220 über eine kurze und eine lange Strebe 41, 42 miteinander verbunden sind. Die Streben 41, 42 sind vorzugsweise längenveränderlich. Auf diese Weise kann durch eine Längenveränderung der Streben 41, 42 der Abstand der beiden Turmsegmente 210, 220 zueinander verändert werden. Dies ist insbesondere vorteilhaft, um das dritte Turmsegment 230 passgenau montieren zu können. Ferner ist in Figur 6 die Verbindung der beiden Turmsegmente 210, 220 über deren Vertikalflansche 213, 223 zu erkennen. Die beiden Turmsegmente sind in Figur 6 auf einem Rollenlager 51 auf einer Basis 52 gelagert.

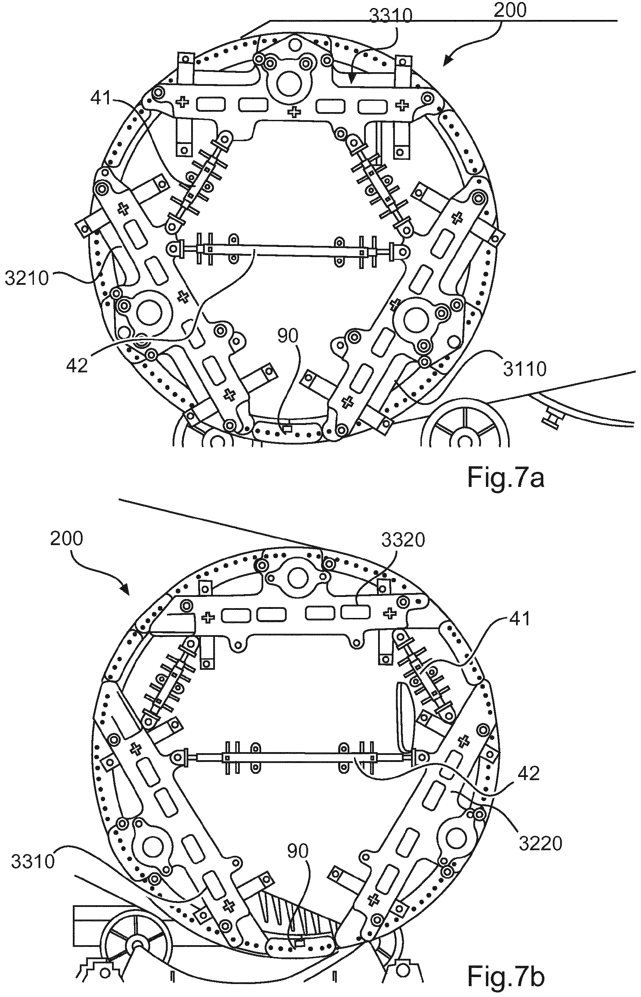

In den Figuren 7a,b ist nun der vollständige Turmabschnitt 200 mit drei Turmsegmenten 210, 220, 230 gezeigt, an deren oberen und unteren Horizontalflanschen jeweils Flanschgestelle 3110, 3210, 3310, 3120, 3220, 3320 und Verbindungsflanschstücke 90 angeordnet sind. Die Flanschgestelle 3110, 3210, 3310, 3120, 3220, 3320 sind am oberen und am unteren Horizontalflansch jeweils mit zwei kürzeren und einer längeren Strebe 41, 42 miteinander verbunden, um die drei Turmsegmente 210, 220, 230 zu stabilisieren, insbesondere, solange deren Vertikalflansche noch nicht miteinander verbunden sind.

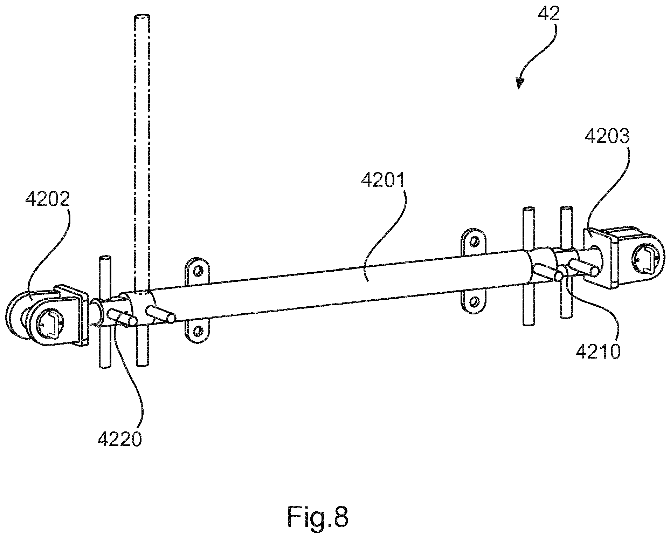

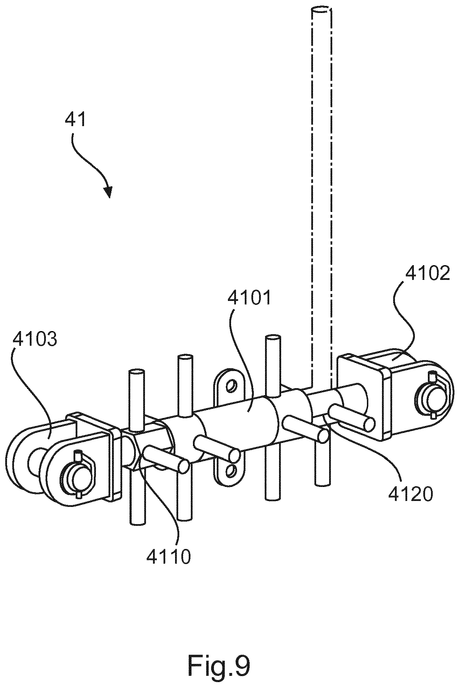

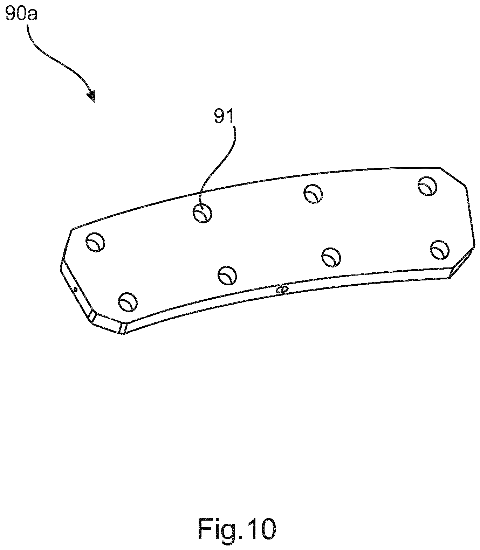

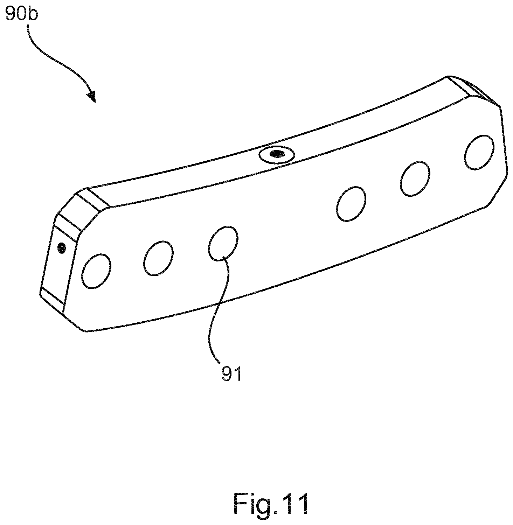

Die Figuren 8 und 9 zeigen beispielhafte Ausführungsformen von Streben 41, 42 mit Kernstücken 4101, 4201, Anschlussstücken 4102, 4103, 4202, 4203 und Teleskopstücken 4110, 4120, 4210, 4220. Die Figuren 10 und 11 zeigen beispielhafte Darstellungen von Verbindungsflanschstücken 90a, 90b mit Durchgangsöffnungen 91 zur Aufnahme von Befestigungselementen, wie beispielweise Schrauben.

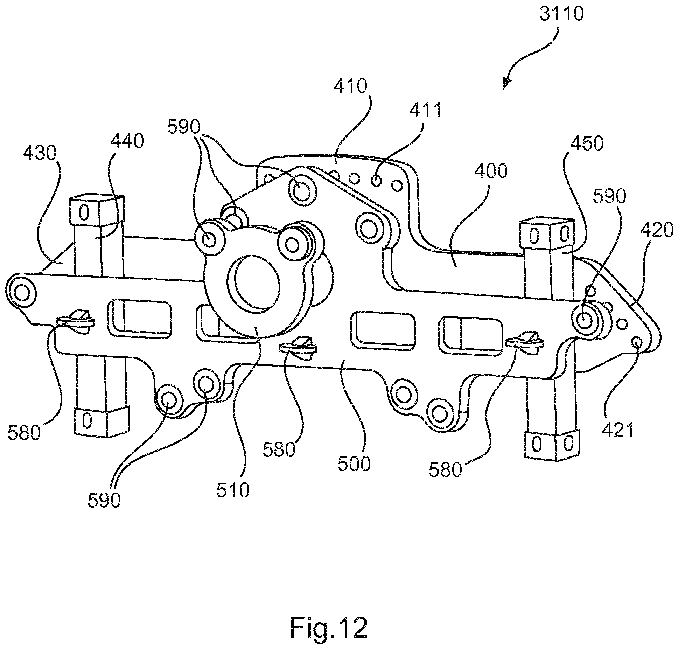

Figur 12 zeigt eine dreidimensionale Darstellung einer Ausführungsform eines Flanschgestells 3110 mit Transportmodul 400 und einem Hebemodul 500, wobei hier das Transportmodul 400 und das Hebemodul 500 einstückig und integral miteinander als ein Bauteil ausgebildet sind. Das Transportmodul 400 weist drei Flanschabschnitt 410, 420, 430 mit Durchgangsöffnungen 411, 421, 431 auf zur Aufnahme von Befestigungselementen, wie beispielweise Schrauben. Ferner sind zwei Stützelemente 440, 450 vorgesehen. Das Hebemodul 500 weist einen Hebebolzen 510 auf sowie mehrere Angriffselemente in Form von Durchgangsöffnungen 590 und in Form von Ösen 580. Die Angriffselemente, insbesondere die Ösen 580, können Teil des Flanschgestells und/oder Teil des Montagesets sein.

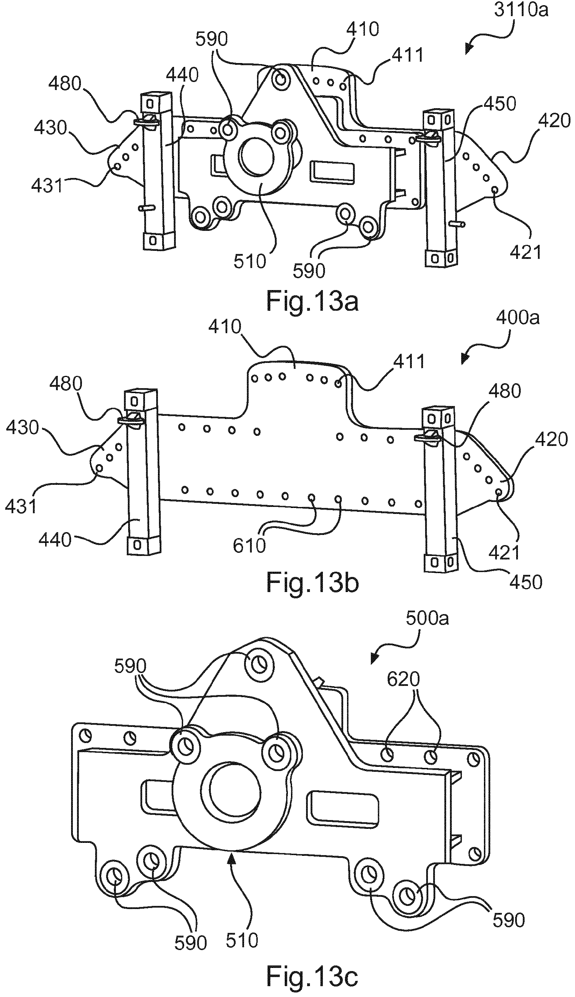

In den Figuren 13a, b, c ist eine Ausführungsform eines Flanschgestells 3110a mit einem Transportmodul 400a und einem Hebemodul 500a gezeigt, die in der hier gezeigten Ausführungsform anders als in Fig. 12 miteinander lösbar verbindbar bzw. verbunden sind. Auf diese Weise kann ein Hebemodul 500a mit daran angeordnetem Hebebolzen 510 mit einer Vielzahl von verschiedenen Transportmodulen 400a verwendet werden. Bis auf die Lösbarkeit der Verbindung zwischen dem Transportmodul 400a und dem Hebemodul 500a kann das Flanschgestell 3110a gleich oder ähnlich ausgebildet sein wie das Flanschgestell 3110.

Beispielsweise kann mit zwei unterschiedlichen Transportmodulen und einem Hebemodul ein Montageset gebildet werden. Vorzugsweise können auch ein oder mehrere Verbindungsflanschstücke, wie beispielsweise in den Figuren 10 und 11 gezeigt, und/oder ein oder mehrere Streben, wie beispielsweise in den Figuren 8 und 9 gezeigt, Teil des Montagesets sein.

Ein Montageset hat den Vorteil, dass für Turmsegmente mit unterschiedlichen Abmessungen lediglich entsprechend abgestimmte Transportmodule bereitgehalten werden müssen, diese jedoch mit Hebemodulen kombiniert werden können, die gleichartig ausgebildet sind. Auf diese Weise kann ein Hebemodul mit einer Vielzahl von verschieden ausgebildeten Transportmodulen eingesetzt werden. Die Verbindungselemente der unterschiedlichen Transportmodule sind vorzugsweise jeweils so positioniert, dass der Hebebolzen eines damit verbundenen Hebemoduls in einem Schwerpunkt und/oder Drehpunkt und/oder einer Schwerelinie und/oder einer Drehlinie des jeweiligen Turmsegments liegt.

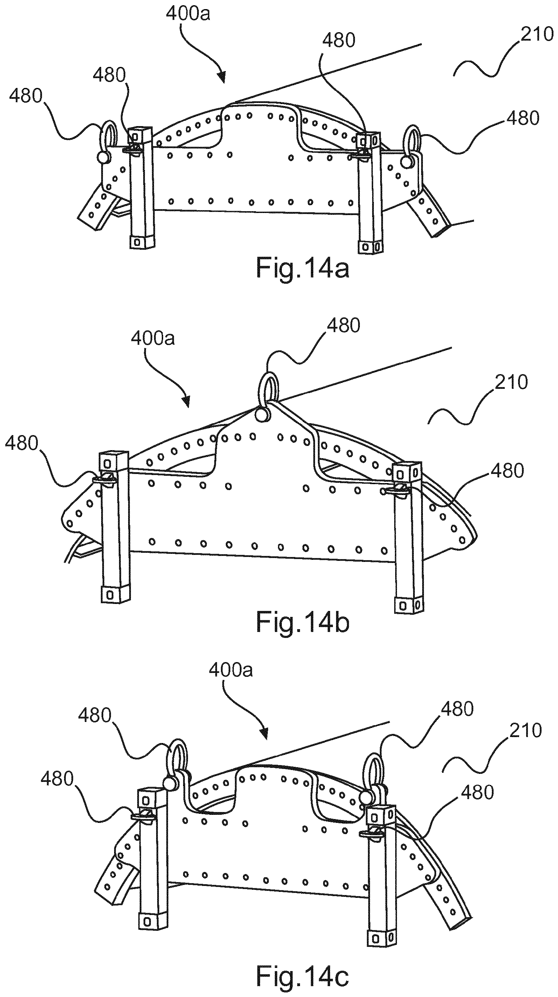

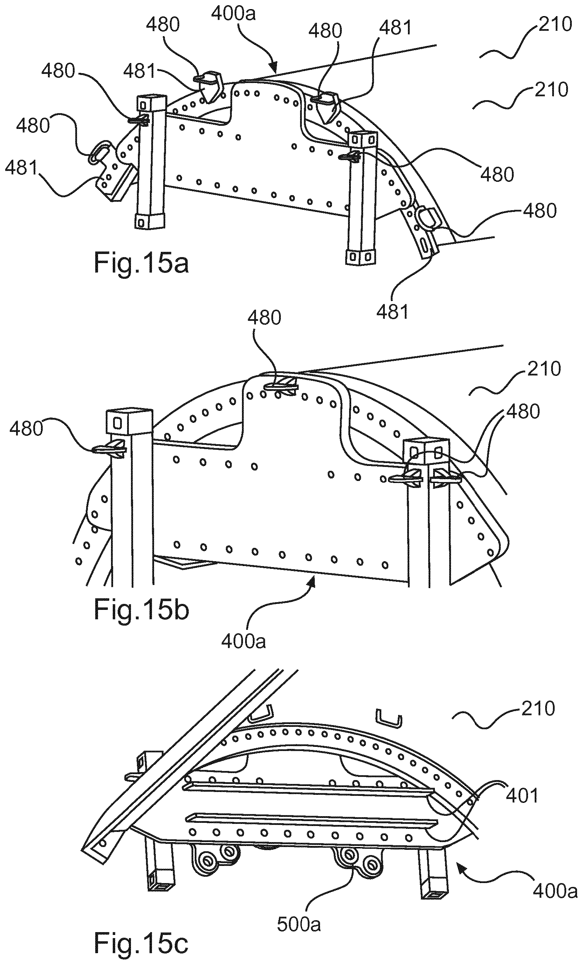

In den Figuren 14 a,b,c und 15a,b sind verschiedene Ausführungsvarianten von Transportmodulen 400a dargestellt, die sich insbesondere durch die Anordnung von Angriffselementen 480 unterscheiden. In Figur 15a sind Angriffselemente 480 nicht nur am Transportmodul angeordnet, sondern auch an zusätzlichen Angriffsflanschstücken 481 .

Figur 15c zeigt ein Flanschgestell mit einem Transportmodul 400a und einem Hebemodul 500a, bei dem am Transportmodul 400a Versteifungsrippen 401 vorgesehen sind.

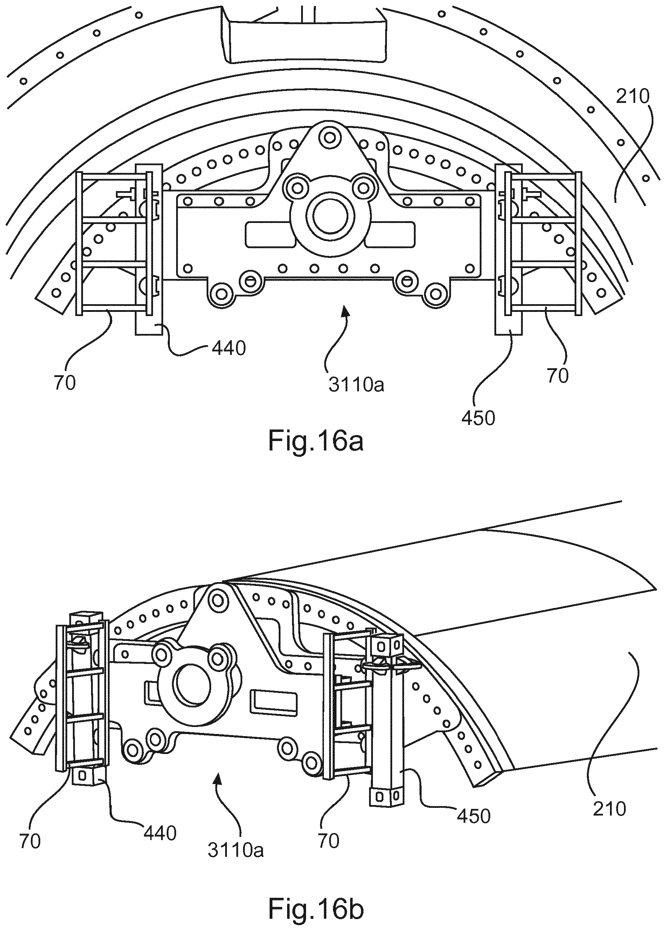

Die Figuren 16a, b zeigen weitere dreidimensionale Darstellungen von Ausführungsvarianten eines Flanschgestells 3110a mit Leitern 70. In Figur 16a sind an den beiden Stützelementen 440, 450 jeweils ein Leiterelement 70 angeordnet, welche sich im wesentlichen in einer Haupterstreckungsebene erstrecken, die parallel zu einer Haupterstreckungsebene des Flanschgestells ist. In Figur 16b sind an den beiden Stützelementen 440, 450 jeweils ein Leiterelement 70 angeordnet, welche sich jeweils im wesentlichen in einer Haupterstreckungsebene erstrecken, die orthogonal zu einer Haupterstreckungsebene des Flanschgestells ist. Die Anordnung von Leiterelementen 70 an einem Flanschgestell 3110a hat insbesondere beim Stapeln von Turmsegmenten den Vorteil, dass auch ein oberes Ende des Stapels über die Leitern 70 erreicht werden kann.

## Patentansprüche

1. Flanschgestell (3110, 3110a, 3210, 3310, 3120, 3220, 3320) zur Vormontage und/oder zum Transport und/oder zur Montage eines Turmsegments (210, 220,230) für eine Windenergieanlage (100) und/oder eines Turmabschnitts (200) einer Windenergieanlage (100) und/oder eines Turms (102) einer Windenergieanlage (100),
umfassend
- zwei Flanschabschnitte (410, 420, 430) zur lösbaren Befestigung des Flanschgestells (3110, 3110a, 3210, 3310, 3120, 3220, 3320) an einem Horizontalflansch (211, 221, 231) eines Turmsegments (210, 220, 230),
- einen Hebebolzen (510) zum Angriff eines schlingenförmigen Hebezeugs (600) indem das schlingenförmige Hebezeug (600) über ein Ende des Hebebolzens (510) geführt wird und an einem Abschnitt einer Außenumfangsfläche des Hebebolzens (510) anliegt,
wobei der Hebebolzen als ein von einer Fläche vorstehender Vorsprung ausgebildet ist,
- ein Stützelement (440, 450) zum Abstützen des Flanschgestells (3110, 3110a, 3210, 3310, 3120, 3220, 3320) auf einer Aufstandsfläche,
- ein Transportmodul (400, 400a) und ein Hebemodul (500, 500a), wobei das Transportmodul (400, 400a) und das Hebemodul (500, 500a) lösbar miteinander verbunden sind,
wobei das Hebemodul (500, 500a) den Hebebolzen (510) umfasst.

2. Flanschgestell (3110, 3110a, 3210, 3310, 3120, 3220, 3320) nach mindestens einem der vorhergehenden Ansprüche,
wobei das Transportmodul (400, 400a) die zwei Flanschabschnitte (410, 420, 430) und das Stützelement (440, 450) umfasst und/oder
wobei die zwei Flanschabschnitte (410, 420, 430) in Umfangsrichtung des Horizontalflansches (211, 221, 231) voneinander beabstandet sind und/oder umfassend ein Angriffselement (480) zum Angriff eines Hebezeugs (600).

3. Flanschgestell (3110, 3110a, 3210, 3310, 3120, 3220, 3320) nach mindestens einem der vorhergehenden Ansprüche,
wobei das Stützelement (440, 450) derart ausgebildet ist, dass sich es im an den Horizontalflansch (211, 221, 231) des Turmsegments (210, 220, 230) angebrachten Zustand nicht über eine Außenfläche der Turmsegmentwandung hinaus erstreckt, und/oder.
wobei das Stützelement (440, 450) derart ausgebildet ist, dass sich es im an den Horizontalflansch (211, 221, 231) des Turmsegments (210, 220, 230) angebrachten Zustand über eine Ebene, welche zwei Vertikalflansche (213, 223) des Turmsegments (210, 220, 230) verbindet, hinaus erstreckt, und/oder wobei das Stützelement (440, 450) derart ausgebildet ist, dass sich ein im Transportzustand unteres Ende des Stützelements (440, 450) auf einem oberen Ende eines weiteren Stützelements, das an einem Horizontalflansch (211, 221, 231) eines weiteren Turmsegments (210, 220, 230) angeordnet ist, abstützt.

4. Montageset zur Vormontage und/oder zum Transport und/oder zur Montage eines Turmsegments (210, 220, 230) für eine Windenergieanlage (100) und/oder eines Turmabschnitts (200) einer Windenergieanlage (100), umfassend
- ein Flanschgestell (3110, 3110a, 3210, 3310, 3120, 3220, 3320) nach mindestens einem der vorhergehenden Ansprüche,
- ein Hebemodul (500, 500a) und ein erstes Transportmodul (400, 400a) und ein zweites Transportmodul, wobei das erste und zweite Transportmodul unterschiedlich ausgebildet sind,
- wobei das erste und das zweite Transportmodul unterschiedliche Abmessungen aufweisen.

5. Montageset nach dem vorhergehenden Anspruch, umfassend mehrere gleich ausgebildete Hebemodule (500, 500a).

6. Montageset nach mindestens einem der vorhergehenden Ansprüche 4-5,
wobei die Flanschabschnitte des ersten Transportmoduls (400, 400a) zur Befestigung an einem Horizontalflansch (211) eines ersten Turmsegments (210) mit einem ersten Radius und die Flanschabschnitte des zweiten Transportmoduls zur Befestigung an einem Horizontalflansch (221) eines zweiten Turmsegments (220) mit einem zweiten Radius ausgebildet sind, wobei der erste Radius von dem zweiten Radius verschieden ist.

7. Montageset nach mindestens einem der vorhergehenden Ansprüche 4-6, wobei das erste Transportmodul (400, 400a) erste Verbindungselemente zur lösbaren Verbindung mit dem Hebemodul (500, 500a) aufweist und das zweite Transportmodul zweite Verbindungselemente zur lösbaren Verbindung mit dem Hebemodul (500, 500a) aufweist.

8. Montageset nach mindestens einem der vorhergehenden Ansprüche 4-7, wobei sich die Position der ersten und zweiten Verbindungselemente unterscheidet.

9. Verfahren zur Vormontage und/oder zum Transport und/oder zur Montage eines Turmsegments (210, 220, 230) für eine Windenergieanlage (100) und/oder eines Turmabschnitts (200) einer Windenergieanlage (100) und/oder eines Turms (102) einer Windenergieanlage (100),
umfassend
- Befestigen der Flanschabschnitte eines Flanschgestells (3110, 3110a, 3210, 3310, 3120, 3220, 3320) nach mindestens einem der vorhergehenden Ansprüche 1-3 an einem Horizontalflansch (211, 221, 231) eines Turmsegments (210, 220, 230),
- Anbringen eines schlingenförmigen Hebezeugs (600) an dem Hebebolzen (510), indem das schlingenförmige Hebezeug (600) über ein Ende des Hebebolzens (510) geführt wird und an einem Abschnitt einer Außenumfangsfläche des Hebebolzens (510) anliegt,
- Anheben des Flanschgestells (3110, 3110a, 3210, 3310, 3120, 3220, 3320) mittels des schlingenförmigen Hebezeugs (600).

10. Verfahren zum Transport eines Turmsegments (210, 220, 230) für eine Windenergieanlage (100) und/oder eines Turmabschnitts (200) einer Windenergieanlage (100) und/oder eines Turms (102) einer Windenergieanlage (100),
umfassend:
- Befestigen der Flanschabschnitte eines ersten Flanschgestells (3110) nach mindestens einem der vorhergehenden Ansprüche 1-3 an einem Horizontalflansch (211) eines ersten Turmsegments (210),
- Befestigen der Flanschabschnitte eines zweiten Flanschgestells (3210) nach mindestens einem der vorhergehenden Ansprüche an einem Horizontalflansch (221) eines zweiten Turmsegments (220),
- Anbringen eines schlingenförmigen Hebezeugs (600) an dem Hebebolzen (510) des ersten Flanschgestells (3110), indem das schlingenförmige Hebezeug (600) über ein Ende des Hebebolzens (510) geführt wird und an einem Abschnitt einer Außenumfangsfläche des Hebebolzens (510) anliegt,
- Anheben des ersten Flanschgestells (3110) mittels des schlingenförmigen Hebezeugs (600),
- Anordnen der beiden Turmsegmente (210, 220) übereinander durch Absenken des ersten Turmsegments (210) derart, dass sich ein unteres Ende des Stützelements (440, 450) des ersten Flanschgestells (3110) an einem oberen Ende des Stützelements des zweiten Flanschgestells (3210) abstützt.

11. Verfahren zur Vormontage und/oder zur Montage eines Turmsegments (210, 220, 230) für eine Windenergieanlage (100) und/oder eines Turmabschnitts (200) einer Windenergieanlage und/oder eines Turms (102) einer Windenergieanlage (100), umfassend:
- Befestigen der Flanschabschnitte eines ersten Flanschgestells (3110) nach mindestens einem der vorhergehenden Ansprüche 1-3 an einem Horizontalflansch (211) eines ersten Turmsegments (210),
- Befestigen der Flanschabschnitte eines zweiten Flanschgestells (3210) nach mindestens einem der vorhergehenden Ansprüche 1-3 an einem Horizontalflansch (221) eines zweiten Turmsegments (220),
- Anordnen der beiden Turmsegmente (210, 220) nebeneinander derart, dass sich ein erster Vertikalflansch (213) des ersten Turmsegments (210) und ein erster Vertikalflansch (223) des zweiten Turmsegments (220) gegenüberliegen,
- Verbinden der Horizontalflansche (211, 221) der beiden Turmsegmente (210, 220) mit einem Verbindungsflanschstück (90, 90a, 90b),
- Verbinden der beiden Flanschgestelle (3110, 3110a, 3210) mit einer Strebe (41, 42).

12. Verfahren zur Vormontage und/oder zur Montage eines Turmsegments (210, 220, 230) für eine Windenergieanlage (100) und/oder eines Turmabschnitts (200) einer Windenergieanlage (100) und/oder eines Turms (102) einer Windenergieanlage (100) nach dem vorhergehenden Anspruch,
umfassend
- Verändern des Abstands eines zweiten Vertikalflansches des ersten Turmsegments (210) und eines zweiten Vertikalflansches des zweiten Turmsegments (220) zueinander mittels der Strebe (41, 42) und/oder
- Verbinden des ersten Vertikalflanschs (213) des ersten Turmsegments (210) mit dem ersten Vertikalflansch (223) des zweiten Turmsegments (220).

13. Verfahren zur Vormontage und/oder zur Montage eines Turmsegments (210, 220, 230) für eine Windenergieanlage (100) und/oder eines Turmabschnitts (200) einer Windenergieanlage (100) und/oder eines Turms (102) einer Windenergieanlage (100) nach mindestens einem der beiden vorhergehenden Ansprüche, umfassend
- Befestigen der Flanschabschnitte eines dritten Flanschgestells (3310) nach mindestens einem der vorhergehenden Ansprüche an einem Horizontalflansch (231) eines dritten Turmsegments (230),
- Anordnen der drei Turmsegmente (210, 220, 230) nebeneinander derart, dass sich ein zweiter Vertikalflansch (213) des ersten Turmsegments (210) und ein erster Vertikalflansch des dritten Turmsegments (230) gegenüberliegen und ein erster Vertikalflansch (223) des zweiten Turmsegments (220) und ein zweiter Vertikalflansch des dritten Turmsegments (230) gegenüberliegen,
- Verbinden des Horizontalflanschs (231) des dritten Turmsegments (230) mit den beiden Horizontalflanschen (211, 221) des ersten und zweiten Turmsegments (210, 220) mit zwei Verbindungsflanschstücken (90, 90a, 90b),
- Verbinden des Flanschgestells (3310) des dritten Turmsegments (230) mit den beiden Flanschgestellen (3110, 3110a, 3210) des ersten und zweiten Turmsegments (210, 220) mit zwei Streben (41, 42),
- vorzugsweise Verbinden des zweiten Vertikalflanschs des ersten Turmsegments (210) mit dem ersten Vertikalflansch des dritten Turmsegments (230) und Verbinden des ersten Vertikalflanschs (223) des zweiten Turmsegments (220) mit dem zweiten Vertikalflansch des dritten Turmsegments (230).

## Claims

1. A flange frame (3110, 3110a, 3210, 3310, 3120, 3220, 3320) for preassembling and/or for transporting and/or for assembling a tower segment (210, 220, 230) for a wind turbine (100) and/or of a tower section (200) of a wind turbine (100) and/or of a tower (102) of a wind turbine (100), comprising
- two flange sections (410, 420, 430) for fastening the flange frame (3110, 3110a, 3210, 3310, 3120, 3220, 3320) in a releasable manner on a horizontal flange (211, 221, 231) of a tower segment (210, 220, 230),
- a lifting bolt (510) for the engagement of a sling-like lifting unit (600) by virtue of the sling-like lifting unit (600) being guided over an end of the lifting bolt (510) and butting against part of an outer circumferential surface of the lifting bolt (510),
wherein the lifting bolt is designed as a protrusion which projects from a surface,
- a supporting element (440, 450) for supporting the flange frame (3110, 3110a, 3210, 3310, 3120, 3220, 3320) on a standing surface,
- a transportation module (400, 400a) and a lifting module (500, 500a), wherein the transportation module (400, 400a) and the lifting module (500, 500a) are connected to one another in a releasable manner,
wherein the lifting module (500, 500a) comprises the lifting bolt (510).

2. The flange frame (3110, 3110a, 3210, 3310, 3120, 3220, 3320) as claimed in at least one of the preceding claims,
wherein the transportation module (400, 400a) comprises the two flange sections (410, 420, 430) and the supporting element (440, 450) and/or wherein the two flange sections (410, 420, 430) are spaced apart from one another in the circumferential direction of the horizontal flange (211, 221, 231) and/or comprising an engagement element (480) with the engagement of a lifting unit (600).

3. The flange frame (3110, 3110a, 3210, 3310, 3120, 3220, 3320) as claimed in at least one of the preceding claims,
wherein the supporting element (440, 450) is designed such that, in the state in which it is fitted on the horizontal flange (211, 221, 231) of the tower segment (210, 220, 230), it does not extend beyond an outer surface of the tower-segment wall, and/or
wherein the supporting element (440, 450) is designed such that, in the state in which it is fitted on the horizontal flange (211, 221, 231) of the tower segment (210, 220, 230), it extends beyond a plane which connects two vertical flanges (213, 223) of the tower segment (210, 220, 230), and/or
wherein the supporting element (440, 450) is designed such that a lower end of the supporting element (440, 450), as seen in the transportation state, is supported on an upper end of a further supporting element, which is arranged on a horizontal flange (211, 221, 231) of a further tower segment (210, 220, 230).

4. An assembly set for preassembling and/or for transporting and/or for assembling a tower segment (210, 220, 230) for a wind turbine (100) and/or a tower section (200) of a wind turbine (100), comprising
- a flange frame (3110, 3110a, 3210, 3310, 3120, 3220, 3320) as claimed in at least one of the preceding claims,
- a lifting module (500, 500a) and a first transportation module (400, 400a) and a second transportation module, wherein the first and second transportation modules are of different designs,
- wherein the first and the second transportation modules have different dimensions.

5. The assembly set as claimed in the preceding claim,
comprising a plurality of identically designed lifting modules (500, 500a).

6. The assembly set as claimed in at least one of the preceding claims 4-5,
wherein the flange sections of the first transportation module (400, 400a) are designed for fastening on a horizontal flange (211) of a first tower segment (210) with a first radius and the flange sections of the second transportation module are designed for fastening on a horizontal flange (221) of a second tower segment (220) with a second radius, wherein the first radius differs from the second radius.

7. The assembly set as claimed in at least one of the preceding claims 4-6,
wherein the first transportation module (400, 400a) has first connecting elements for releasable connection to the lifting module (500, 500a) and the second transportation module has second connecting elements for releasable connection to the lifting module (500, 500a).

8. The assembly set as claimed in at least one of the preceding claims 4-7,
wherein the positions of the first and second connecting elements differ.

9. A method for preassembling and/or for transporting and/or for assembling a tower segment (210, 220, 230) for a wind turbine (100) and/or a tower section (200) of a wind turbine (100) and/or a tower (102) of a wind turbine (100),
comprising:
- fastening the flange sections of a flange frame (3110, 3110a, 3210, 3310, 3120, 3220, 3320) as claimed in at least one of the preceding claims 1-3 on a horizontal flange (211, 221, 231) of a tower segment (210, 220, 230),
- fitting a sling-like lifting unit (600) on the lifting bolt (510), by virtue of the sling-like lifting unit (600) being guided over an end of the lifting bolt (510) and butting against part of an outer circumferential surface of the lifting bolt (510),
- raising the flange frame (3110, 3110a, 3210, 3310, 3120, 3220, 3320) by means of the sling-like lifting unit (600).

10. A method for transporting a tower segment (210, 220, 230) for a wind turbine (100) and/or a tower section (200) of a wind turbine (100) and/or a tower (102) of a wind turbine (100),
comprising:
- fastening the flange sections of a first flange frame (3110) as claimed in at least one of the preceding claims 1-3 on a horizontal flange (211) of a first tower segment (210),
- fastening the flange sections of a second flange frame (3210) as claimed in at least one of the preceding claims on a horizontal flange (221) of a second tower segment (220),
- fitting a sling-like lifting unit (600) on the lifting bolt (510) of the first flange frame (3110), by virtue of the sling-like lifting unit (600) being guided over an end of the lifting bolt (510) and butting against part of an outer circumferential surface of the lifting bolt (510),
- raising the first flange frame (3110) by means of the sling-like lifting unit (600),
- arranging the two tower segments (210, 220) one above the other by lowering the first tower segment (210) such that a lower end of the supporting element (440, 450) of the first flange frame (3110) is supported on an upper end of the supporting element of the second flange frame (3210).

11. A method for preassembling and/or for assembling a tower segment (210, 220, 230) for a wind turbine (100) and/or a tower section (200) of a wind turbine and/or a tower (102) of a wind turbine (100),
comprising:
- fastening the flange sections of a first flange frame (3110) as claimed in at least one of the preceding claims 1-3 on a horizontal flange (211) of a first tower segment (210),
- fastening the flange sections of a second flange frame (3210) as claimed in at least one of the preceding claims 1-3 on a horizontal flange (221) of a second tower segment (220),
- arranging the two tower segments (210, 220) one beside the other such that a first vertical flange (213) of the first tower segment (210) and a first vertical flange (223) of the second tower segment (220) are located opposite one another,
- connecting the horizontal flanges (211, 221) of the two tower segments (210, 220) by means of a connecting-flange piece (90, 90a, 90b), and
- connecting the two flange frames (3110, 3110a, 3210) by means of a strut (41, 42).

12. The method for preassembling and/or for assembling a tower segment (210, 220, 230) for a wind turbine (100) and/or a tower section (200) of a wind turbine (100) and/or a tower (102) of a wind turbine (100) as claimed in the preceding claim, comprising
- altering the distance between a second vertical flange of the first tower segment (210) and a second vertical flange of the second tower segment (220) in relation to one another by means of the strut (41, 42), and/or
- connecting the first vertical flange (213) of the first tower segment (210) to the first vertical flange (223) of the second tower segment (220).

13. The method for preassembling and/or for assembling a tower segment (210, 220, 230) for a wind turbine (100) and/or a tower section (200) of a wind turbine (100) and/or a tower (102) of a wind turbine (100) as claimed in at least one of the two preceding claims,
comprising
- fastening the flange sections of a third flange frame (3310) as claimed in at least one of the preceding claims on a horizontal flange (231) of a third tower segment (230),
- arranging the three tower segments (210, 220, 230) one beside the other such that a second vertical flange (213) of the first tower segment (210) and a first vertical flange of the third tower segment (230) are located opposite one another and a first vertical flange (223) of the second tower segment (220) and a second vertical flange of the third tower segment (230) are located opposite one another,
- connecting the horizontal flange (231) of the third tower segment (230) to the two horizontal flanges (211, 221) of the first and second tower segments (210, 220) by means of two connecting-flange pieces (90, 90a, 90b),
- connecting the flange frame (3310) of the third tower segment (230) to the two flange frames (3110, 3110a, 3210) of the first and second tower segments (210, 220) by means of two struts (41, 42),preferably connecting the second vertical flange of the first tower segment (210) to the first vertical flange of the third tower segment (230) and connecting the first vertical flange (223) of the second tower segment (220) to the second vertical flange of the third tower segment (230).

## Revendications

1. Cadre de bride (3110, 3110a, 3210, 3310, 3120, 3220, 3320) pour le pré-montage et/ou pour le transport et/ou pour le montage d'un segment de tour (210, 220, 230) pour une éolienne (100) et/ou d'une partie de tour (200) d'une éolienne (100) et/ou d'une tour (102) d'une éolienne (100),
comprenant
- deux parties de bride (410, 420, 430) pour la fixation libérable du cadre de bride (3110, 3110a, 3210, 3310, 3120, 3220, 3320) sur une bride horizontale (211, 221, 231) d'un segment de tour (210, 220, 230),
- un boulon de levage (510) pour agir sur un engin de levage en forme de boucle (600) du fait que l'engin de levage en forme de boucle (600) est guidé au-dessus d'une extrémité du boulon de levage (510) et s'applique sur une partie d'une surface périphérique extérieure du boulon de levage (510),
dans lequel le boulon de levage est réalisé en tant que partie saillante faisant saillie d'une surface,
- un élément de support (440, 450) pour supporter le cadre de bride (3110, 3110a, 3210, 3310, 3120, 3220, 3320) sur une surface d'appui,
- un module de transport (400, 400a) et un module de levage (500, 500a), dans lequel le module de transport (400, 400a) et le module de levage (500, 500a) sont reliés l'un à l'autre de manière libérable,
dans lequel le module de levage (500, 500a) comprend le boulon de levage (510).

2. Cadre de bride (3110, 3110a, 3210, 3310, 3120, 3220, 3320) selon au moins l'une des revendications précédentes,
dans lequel le module de transport (400, 400a) comprend les deux parties de bride (410, 420, 430) et l'élément de support (440, 450) et/ou
dans lequel les deux parties de bride (410, 420, 430) sont espacées l'une de l'autre dans la direction périphérique de la bride horizontale (211, 221, 231) et/ou comprenant un élément d'action (480) pour agir sur un engin de levage (600).

3. Cadre de bride (3110, 3110a, 3210, 3310, 3120, 3220, 3320) selon au moins l'une des revendications précédentes,
dans lequel l'élément de support (440, 450) est réalisé de telle sorte que, dans l'état monté sur la bride horizontale (211, 221, 231) du segment de tour (210, 220, 230), il ne s'étend pas au-delà d'une surface extérieure de la paroi de segment de tour, et/ou
dans lequel l'élément de support (440, 450) est réalisé de telle sorte que, dans l'état monté sur la bride horizontale (211, 221, 231) du segment de tour (210, 220, 230), il s'étend au-delà d'un plan, lequel relie deux brides verticales (213, 223) du segment de tour (210, 220, 230), et/ou
dans lequel l'élément de support (440, 450) est réalisé de telle sorte qu'une extrémité inférieure de l'élément de support (440, 450) dans l'état de transport s'appuie sur une extrémité supérieure d'un autre élément de support, qui est disposé sur une bride horizontale (211, 221, 231) d'un autre segment de tour (210, 220, 230).

4. Kit de montage pour le pré-montage et/ou pour le transport et/ou pour le montage d'un segment de tour (210, 220, 230) pour une éolienne (100) et/ou d'une partie de tour (200) d'une éolienne (100), comprenant
- un cadre de bride (3110, 3110a, 3210, 3310, 3120, 3220, 3320) selon au moins l'une des revendications précédentes,
- un module de levage (500, 500a) et un premier module de transport (400, 400a) et un deuxième module de transport, dans lequel le premier et le deuxième module de transport sont réalisés de manière différente,
- dans lequel le premier et le deuxième module de transport présentent des dimensions différentes.

5. Kit de montage selon la revendication précédente, comprenant plusieurs modules de levage (500, 500a) réalisés de la même façon.

6. Kit de montage selon au moins l'une des revendications précédentes 4 et 5,
dans lequel les parties de bride du premier module de transport (400, 400a) sont réalisées pour la fixation sur une bride horizontale (211) d'un premier segment de tour (210) avec un premier rayon et les parties de bride du deuxième module de transport pour la fixation sur une bride horizontale (221) d'un deuxième segment de tour (220) avec un deuxième rayon, dans lequel le premier rayon est différent du deuxième rayon.

7. Kit de montage selon au moins l'une des revendications précédentes 4 à 6, dans lequel le premier module de transport (400, 400a) présente des premiers éléments de liaison pour la liaison libérable au module de levage (500, 500a) et le deuxième module de transport présente des deuxièmes éléments de liaison pour la liaison libérable au module de levage (500, 500a).

8. Kit de montage selon au moins l'une des revendications précédentes 4 à 7, dans lequel la position des premier et deuxième éléments de liaison diffère.

9. Procédé pour le pré-montage et/ou pour le transport et/ou pour le montage d'un segment de tour (210, 220, 230) pour une éolienne (100) et/ou d'une partie de tour (200) d'une éolienne (100) et/ou d'une tour (102) d'une éolienne (100),
comprenant
- la fixation des parties de bride d'un cadre de bride (3110, 3110a, 3210, 3310, 3120, 3220, 3320) selon au moins l'une des revendications précédentes 1 à 3 sur une bride horizontale (211, 221, 231) d'un segment de tour (210, 220, 230),
- le montage d'un engin de levage en forme de boucle (600) sur le boulon de levage (510), du fait que l'engin de levage en forme de boucle (600) est guidé au-dessus d'une extrémité du boulon de levage (510) et s'applique sur une partie d'une surface périphérique extérieure du boulon de levage (510),
- le levage du cadre de bride (3110, 3110a, 3210, 3310, 3120, 3220, 3320) au moyen de l'engin de levage en forme de boucle (600).

10. Procédé pour le transport d'un segment de tour (210, 220, 230) pour une éolienne (100) et/ou d'une partie de tour (200) d'une éolienne (100) et/ou d'une tour (102) d'une éolienne (100),
comprenant :
- la fixation des parties de bride d'un premier cadre de bride (3110) selon au moins l'une des revendications précédentes 1 à 3 sur une bride horizontale (211) d'un premier segment de tour (210),
- la fixation des parties de bride d'un deuxième cadre de bride (3210) selon au moins l'une des revendications précédentes sur une bride horizontale (221) d'un deuxième segment de tour (220),
- le montage d'un engin de levage en forme de boucle (600) sur le boulon de levage (510) du premier cadre de bride (3110), du fait que l'engin de levage en forme de boucle (600) est guidé au-dessus d'une extrémité du boulon de levage (510) et s'applique sur une partie d'une surface périphérique extérieure du boulon de levage (510),
- le levage du premier cadre de bride (3110) au moyen de l'engin de levage en forme de boucle (600),
- la disposition des deux segments de tour (210, 220) l'un au-dessus de l'autre par abaissement du premier segment de tour (210), de telle sorte qu'une extrémité inférieure de l'élément de support (440, 450) du premier cadre de bride (3110) s'appuie sur une extrémité supérieure de l'élément de support du deuxième cadre de bride (3210).

11. Procédé pour le pré-montage et/ou pour le montage d'un segment de tour (210, 220, 230) pour une éolienne (100) et/ou d'une partie de tour (200) d'une éolienne et/ou d'une tour (102) d'une éolienne (100),
comprenant :
- la fixation des parties de bride d'un premier cadre de bride (3110) selon au moins l'une des revendications précédentes 1 à 3 sur une bride horizontale (211) d'un premier segment de tour (210),
- la fixation des parties de bride d'un deuxième cadre de bride (3210) selon au moins l'une des revendications précédentes 1 à 3 sur une bride horizontale (221) d'un deuxième segment de tour (220),
- la disposition des deux segments de tour (210, 220) l'un à côté de l'autre, de telle sorte qu'une première bride verticale (213) du premier segment de tour (210) et une première bride verticale (223) du deuxième segment de tour (220) se font face,
- la liaison des brides horizontales (211, 221) des deux segments de tour (210, 220) avec une pièce de bride de liaison (90, 90a, 90b),
- la liaison des deux cadres de bride (3110, 3110a, 3210) avec une entretoise (41, 42).

12. Procédé pour le pré-montage et/ou pour le montage d'un segment de tour (210, 220, 230) pour une éolienne (100) et/ou d'une partie de tour (200) d'une éolienne (100) et/ou d'une tour (102) d'une éolienne (100) selon la revendication précédente,
comprenant
- la modification de l'écart d'une deuxième bride verticale du premier segment de tour (210) et d'une deuxième bride verticale du deuxième segment de tour (220) l'une par rapport à l'autre au moyen de l'entretoise (41, 42) et/ou
- la liaison de la première bride verticale (213) du premier segment de tour (210) à la première bride verticale (223) du deuxième segment de tour (220).

13. Procédé pour le pré-montage et/ou pour le montage d'un segment de tour (210, 220, 230) pour une éolienne (100) et/ou d'une partie de tour (200) d'une éolienne (100) et/ou d'une tour (102) d'une éolienne (100) selon au moins l'une des deux revendications précédentes,
comprenant
- la fixation des parties de bride d'un troisième cadre de bride (3310) selon au moins l'une des revendications précédentes sur une bride horizontale (231) d'un troisième segment de tour (230),
- la disposition des trois segments de tour (210, 220, 230) les uns à côté des autres, de telle sorte qu'une deuxième bride verticale (213) du premier segment de tour (210) et une première bride verticale du troisième segment de tour (230) se font face et une première bride verticale (223) du deuxième segment de tour (220) et une deuxième bride verticale du troisième segment de tour (230) se font face,
- la liaison de la bride horizontale (231) du troisième segment de tour (230) aux deux brides horizontales (211, 221) du premier et deuxième segment de tour (210, 220) avec deux pièces de bride de liaison (90, 90a, 90b),
- la liaison du cadre de bride (3310) du troisième segment de tour (230) aux deux cadres de bride (3110, 3110a, 3210) du premier et deuxième segment de tour (210, 220) avec deux traverses (41, 42),
- de préférence la liaison de la deuxième bride verticale du premier segment de tour (210) à la première bride verticale du troisième segment de tour (230) et la liaison de la première bride verticale (223) du deuxième segment de tour (220) à la deuxième bride verticale du troisième segment de tour (230).
